# EUROPÄISCHE PATENTSCHRIFT

(11) **EP 1 637 761 B1**
(45) Veröffentlichungstag und Bekanntmachung des Hinweises auf die Patenterteilung: **27.08.2008**
(21) Anmeldenummer: 05019822.5
(22) Anmeldetag: 13.09.2005
(51) Int. Cl.: F16D 65/20

(54) **Hydraulische Scheibenbremse mit einer elastischen Betätigungseinrichtung**
Hydraulic disc brake with elastic actuator
Frein à disque hydraulique avec actionneur élastique

(30) Priorität: 15.09.2004 EP 04021883
(43) Veröffentlichungstag der Anmeldung: 22.03.2006
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- US-A- 2 745 435
- US-A- 3 666 059
- US-A- 4 605 104
- US-A- 5 484 041

## Beschreibung

Die Erfindung betrifft eine neuartige Scheibenbremse, bei der die hydraulisch aufgewendete Kraft nicht über entsprechende herkömmliche Bremskolben sondern mittels einer Elastomerschicht, beziehungsweise eines Elastomerkolbens auf die Bremsscheibe übertragen wird. Die erfindungsgemäße Elastomerbremse weist gegenüber den konventionellen Scheibenbremsen eine Reihe von vorteilhaften Eigenschaften auf und eignet sich insbesondere zum Abbremsen von sich drehenden schweren Teilen in größeren Vorrichtungen und Maschinen.

Herkömmliche Scheibenbremsen gemäß des Standes der Technik, beispielsweise im Fahrzeugbau, weisen eine auf der Nabe des Rades mitlaufende Metallscheibe auf, an die zum Bremsen hydraulisch mit Hilfe von Bremskolben oder Bremszangen Bremsklötze / Bremsbeläge gepresst werden, die beidseitig auf die Scheibe einwirken. Diese sind im so genannten Bremssattel angebracht, je nach Konstruktion unterscheidet man zwischen Ein- und Mehrkolbensätteln, sowie zwischen Fest- und Schwimmsattelbremsen: Einkolbensättel haben nur einen Bremskolben. Heute werden in der Regel Mehrkolbensättel verwendet. Bei Festsattelbremsen ist der Sattel unbeweglich und die Bremskolben befinden sich auf beiden Seiten der Scheibe. Schwimmsattelbremsen dagegen haben die Kolben nur auf einer Seite der Scheibe, der beweglich aufgehängte Sattel überträgt den Druck dann mechanisch auf die andere Seite der Bremsscheibe. Hochwertige Bremsen für extreme Belastungen sind in der Regel Festsattelbremsen bei denen der Sattel aus nur einem Teil gegossen wird. Generell hängt die maximale Bremskraft von den Reibwerten der verwendeten Materialien und derer aktuellen Temperatur und dem Druck mit dem die Bremsklötze auf die Scheibe gedrückt werden (Bremsdruck) ab. In der Praxis spielen hier aber auch Verunreinigungen wie Staub, Nässe oder gar Ölrückstände eine Rolle.
Obwohl moderne Scheibenbremsen des Standes der Technik bereits den teilweise gestellten hohen Anforderungen gerecht werden, sind sie mit einem prinzipiellen Problem behaftet, welches meist nur durch Einsatz bester Materialien und sorgfältiger Verarbeitungsweise beherrscht werden kann und leicht verschleißanfällig ist: beim Einsatz von Kolben erfahren diese beim Bremsvorgang Querkräfte, die zur permanenten Abnutzung der Kolben und Dichtungen fiihren. Undichtigkeiten sind an dieser Stelle jedoch besonders ungünstig, da die Reibung der Bremsbeläge durch das Aufbringen von Hydraulikflüssigkeit beeinträchtigt und damit die Funktion der Bremse reduziert wird.
Im Anlagenbau sind ferner Bremssysteme auf Basis von Scheibenbremsen bekannt, bei denen Kraftelemente direkt über Membrane betrieben werden. Diese sind jedoch nicht für hohe Lasten geeignet, da die Membrane einen Bewegungsspalt zwischen bewegtem und unbewegtem Teil benötigt. Bei hohem Druck wird sich die Membrane durch diesen Spalt quetschen.

Das Dokument US 4605104 offenbart eine Scheibenbremse mit den Merkmalen des Oberbegriffs des Anspruchs 1

Es bestand somit die Aufgabe, eine Scheibenbremse zur Verfügung zu stellen, welche die genannten Nachteile nicht aufweist und überdies Vorteile bietet, welche einen universellen Einsatz für die verschiedensten Bereiche des Maschinen- und Fahrzeugbaus ermöglicht.

Die Aufgabe wird durch die Merkmale der erfindungsgemäßen Scheibenbremse gemäß Anspruch 1 gelöst.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Im folgenden werden die Abbildungen und die oben und unten beschriebenen Bezugszeichen kurz erläutert:

| | |
|---|---|
| *1* | *Bremszange bestehend aus zwei Bremsbackenhälften* |
| *2* | *Druckmembran* |
| *3, 25* | *Elastomere Ausgleichsschicht, Elastomerkolben* |
| *4* | *Zwischenplatte* |
| *5. 23* | *Träger für Bremsbelag* |
| *6, 22* | *Bremsbelag* |
| *7, 27* | *Bohrung* / *Zuführung Bremsflüssigkeit* |
| *8* | *Bremsscheibe* |
| *9* | *Fluid* / *Bremsflüssigkeit* |
| *10, 25* | *Hohlraum für Fluid* / *Bremsflüssigkeit* |
| *11* | *Rippe* / *Zwischensteg* |
| *21* | *Bremsbacke* |
| *24* | *Elastomerring* |
| *28* | *Druckplatte* |

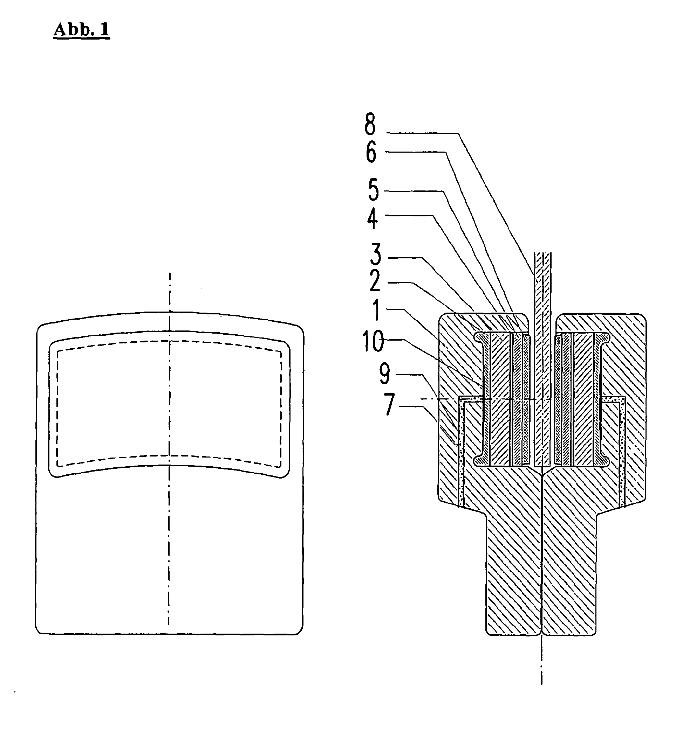

- Abb. 1: zeigt eine nicht erfindungsgemäße Scheibenbremse in zwei Schnitten.
- Abb. 2: zeigt einen Querschnitt durch die Scheibenbremse der Abb. 1.
- Abb. 3: zeigt eine rechteckige Ausführungsform der erfindungsgemäßen Scheibenbremse in drei-dimensionaler Darstellung in drucklosem Betriebszustand.
- Abb. 4: zeigt eine erfindungsgemäße Scheibenbremse mit Mehrkammersystem in runder Ausführungform und unter Last in drei-dimensionaler Darstellung.
- Abb. 5: Zeigt einen Ausschnitt der Abb. 4

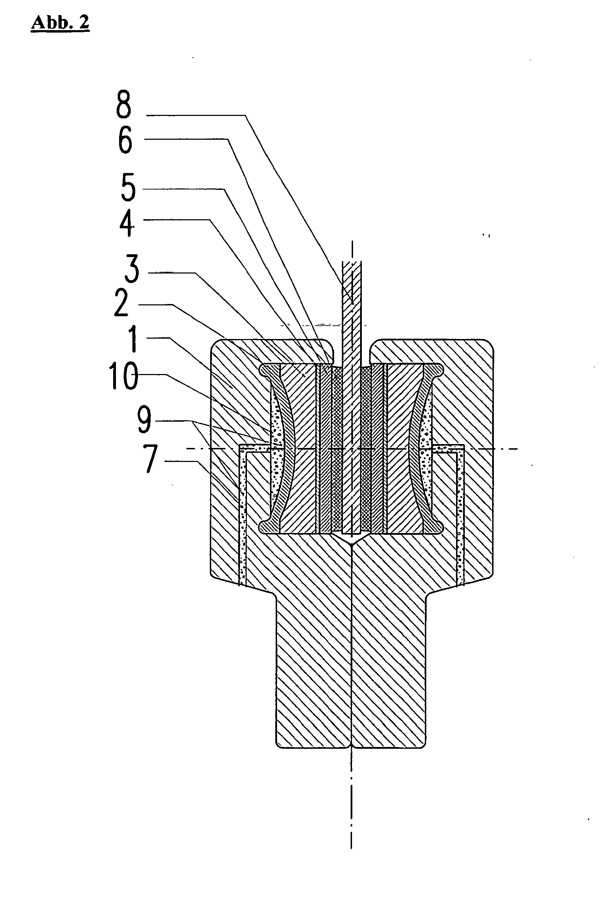

Eine in die Bremszange (1), bzw. Bremsbackenhälften (21) befindliche vorzugsweise umlaufend einvulkanisierte Druckmembran (2) wird von einer Hydraulikflüssigkeit (9), die über eine oder mehrere Zuführungen (7, 27) in den Raum zwischen der Innenseite der Zange (1) und der besagten Druckmembran mittels hydraulischen Drucks gepresst wird, aufgebläht. Diese überträgt den Druck auf die darüber bzw. dahinter liegende elastomere Druckübertragungsschicht (3, 25), den erfindungsgemäßen Elastomerkolben, der sich ähnlich wie eine Flüssigkeit verhält (Abb. 2) und damit den entstehenden Druck durch Verformung bzw. Zusammenpressen, weiter überträgt. Eine solche elastomere Schicht wirkt also als elastomerer Bremskolben. Es ist auch denkbar, dass das hydraulische System auch ohne Druckmembran (2) auskommen kann, wenn die Elastomereschicht (3, 25) entsprechend dafür vorgesehen und konstruktiv gestaltet ist.
Die Druckübertragung erfolgt entweder direkt auf den Bremsbelagträger (5, 23) oder über eine Zwischenplatte (4) und / oder eine Druckplatte (28). Die optionale Druckplatte (28) hat die Aufgabe den durch die Elatomerschicht erzeugten Druck gleichmäßig auf den hinter der Druckplatte befindlichen Bremsbelagträger (5, 23) bzw. Bremsbelag (6, 22) zu übertragen. Die Zwischenplatte (4) hat die Aufgabe zu verhindern, dass bei Verpressung der Elastomerschicht (3, 25) diese an den Rändern in die Zwischenräume zwischen Bremsbacke (21) bzw. Bremszange (1) und Bremsbelag (6, 22), bzw. Bremsbelagträger (23, 5) gedrückt wird und so die Bremswirkung ungünstig beeinflusst.

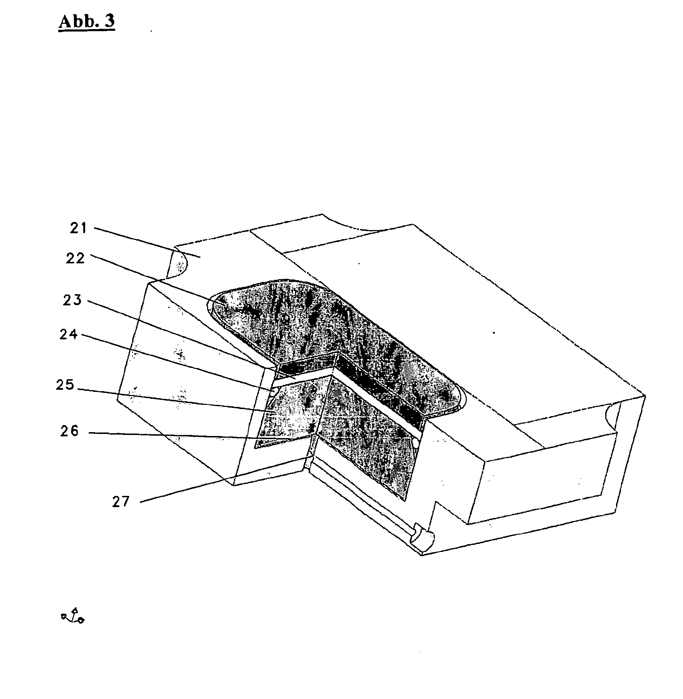

Dies kann allerdings mit der erfindungsgemäßen Scheibenbremse verbessert und sogar vollständig unterbunden werden, wenn die Zwischenplatte durch einen Elastomerring (24) ersetzt ist. Dieser Elastomerring ist umlaufend an der Grenzfläche zwischen Bremsbacke/-zange und Bremsbelag bzw. Elastomerkolben (3, 25), Druckplatten etc. angeordnet. Vorzugsweise ist er zwischen Elastomerschicht (3, 25) und Bremsbelagträger (5, 23) oder, falls vorhanden, Druckplatte (28) angeordnet (Abb. 3, 4, 5). Hierbei kann er in eine entsprechend geformte, vorzugsweise keilförmige Aussparung (zum Beispiel durch Materialwegnahme) am Elastomerkolben (3, 25) oder an der Bremszange (1) eingelegt sein. Der Elastomerring hat vorzugsweise eine deutlich höhere Shore-Härte als das Material des Elastomerkolbens (3, 25), so dass der Ring bei auftretenden Bremsdruck im Gegensatz zur Elastomerschicht (3, 25) nur geringfügig zusammengedrückt wird und dadurch ein Eindringen von Material aus den Randbezirken des Elastomerkolbens (3, 25) in die Spaltbereiche zwischen Bremsbacke und Bremsbelag durch Abdichtung wirksam verhindert wird. Der Elastomerring wirkt also als Dichtungsring. Ein solcher Dichtungsring ist einfacher, wirksamer und von deutlich geringerem Gewicht als die Zwischenplatte (4), selbst wenn diese als Ring oder Scheibe ausgebildet ist. Dieser Ring ermöglicht somit eine größere Bremsbewegung, ohne dass sich Material des Elastomerkolbens in den zwangsweise erforderlichen Spalt setzt. Abb. 3 zeigt die erfindungsgemäße Scheibenbremse drucklos.

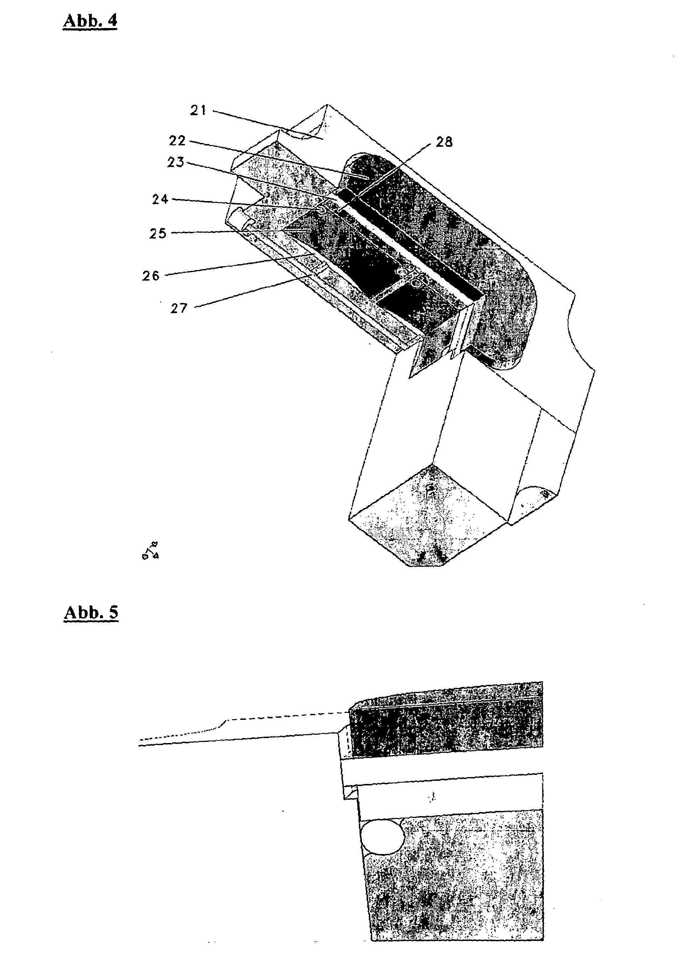

In Abb. 4 ist die Bremse unter Last gezeichnet. Hier wird deutlich, dass der Elastomerring (24) nur geringfügig verformt wird, während sich der weichere Werkstoff des Elastomerkolbens stärker verformt. Ein Einklemmen des Elastomerkolben Werkstoffes ist aufgrund der elastischen Eigenschaften des Elastomerringes nicht zu beobachten. Die Wulste des Elastomeres, die immer mit einem Radius enden, dringen nicht vollständig in die sich ergebenden keilförmigen Spalte ein. Quetschen ist somit weitestgehend ausgeschlossen. Das ist in Abb. 5 noch deutlicher zu sehen.

Erfindungsgemäß kann eine Bremseinheit inklusive ihrer Einzelteile (Elastomerkolben, Bremsbeläge, Platten etc.) rund oder rechteckig sein oder jede andere Form aufweisen. Vorzugsweise, haben Druckmembran und Elastomerschicht gleiche Form und Größe, sind also deckungsgleich. Die elastomere Schicht (3, 25) kann jedoch auch eine andere Form, insbesondere eine größere Fläche als die Membran haben und damit durch die Flächenvergrößerung bei gleichem Druck eine größere Kraft aufbringen. Die Elastomerschicht kann unterschiedlich dick sein, je nach Größe der einzusetzenden Bremse. In der Regel ist sie zwischen 0.5 cm und 5 cm dick.
Die Druckmembran (2) kann an die Bremszange anvulkanisiert werden oder auch als Einlegeteil, welches sich bei einströmender Flüssigkeit (9) an die begrenzenden Teile dichtend anpresst, eingebracht werden Es können eine oder mehrere Membranen je Bremse eingesetzt werden, ebenso wie eine oder mehrere Elastomerschichten (3, 25) pro Bremszange (1), bzw. auch pro Bremsbackenhälfte (21) verwendet werden können.
In jeder Bremsbackenhälfte können Stege und Rippen verlaufen, welche den Raum, bzw. die Fläche bis zur Bremsbelag (6, 22), bzw. den Platten (4) und (5), (28) vollständig oder teilweise durchdringen. So kann beispielsweise im unteren Bereich (Innenseite der Bremsbackenzange (1)) die Membran als Mehrkammersystem, (mehrere Membranen nebeneinander) gestaltet werden, während im oberen Bereich (bremsscheibenseitig) die Elastomer- Ausgleichsschicht zu einer Einheit zusammengeführt ist.

Die Membran (2) besteht vorzugsweise aus Kautschuk oder einem anderen dehnungsfähigen nachgiebigen verhältnismäßig dünnem (beispielsweise 0.3 ― 3 mm Dicke) Kunststoffmaterial, welches eine entsprechende chemische Beständigkeit gegenüber der zu verwendeten Hydraulikflüssigkeit (9) aufweisen sollte. Als Beispiel seien genannt: Acrylnitril-Butadien-Kautschuk (NBR), Chlorbutadien-Kautschuk (CR), Acrylat-Kautschuk (ACM), Ethylen-Acrylat-Kautschuk (AEM), Silikon-Kautschuk Methyl-Polysiloxan (MQ), Vinyl-Methyl-Polysiloxan (VMQ), Phenyl-Vinyl-Methyl-Polysiloxan (PVMQ), Phenyl-Methyl-Polysiloxan (PMQ), Fluorsilikon-Kautschuk Fluormethyl-Polysiloxan (FVMQ), Fluor-Kautschuk (FKM), Polyurethan Polyester-Urethan-Kautschuk (AU), Polyester-Urethan-Kautschuk (EU), Ethylenoxid-Epichlorhydrin-Kautschuk (ECO), Epichlorhydrin-Polymer (CO), Chlorsulfoniertes Polyethylen (CSM) oder Ethylen-Propylen-Copolymer (EPM).

Die Elastomerschicht (3, 25) ist über oder hinter der Membran (2) angeordnet. Sie kann Bestandteil der Membran (2) sein, also mit ihr fest verbunden. Sie kann aber auch lose, oder teilweise mit ihr verbunden angeordnet sein. In besonderen Ausführungsformen kann die erfindungsgemäße Bremse auch ohne Druckmembran (2) ausgestattet sein.
Die erfindungsgemäß verwendeten Elastomerschichten (3, 25) bestehen im wesentlichen aus einem Naturkautschuk, einem Naturkautschukderivat oder aus einem geeigneten elastischen polymeren Kunststoff oder Kunststoffgemisch analog, wie es oben für das Material der Druckmembran angegeben ist. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben. Vorzugsweise werden handelsübliche Naturkautschuke oder Kunststoffe eingesetzt mit einer Shore-Härte. Welche deutlich höher ist als die verwendeten Membranen (2).

Die nicht-elastomeren Platten (4), (5) oder (28) sind erfindungsgemäß aus weitestgehend unelastischen, vorzugsweise Wärme isolierenden Werkstoffen mit geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Platten können untereinander lose oder durch Vulkanisierung fest miteinander verbunden werden. Die Platten können aus Gründen der Gewichtseinsparung auch nicht durchgehend sein, sondern können auch als Ringe, Scheiben oder Siebplatten oder Siebscheiben ausgestaltet sein. Die Platte (4), welche optional eingesetzt werden kann, ist über bzw. hinter der Elastomerschicht (3, 25) angeordnet. Sie kann lose eingelegt oder auch ganz oder teilweise mit der Elastomer Ausgleichsschicht verbunden sein. Sie kann auch Teil der Elastomerausgleichsschicht (3, 25) sein.
Der Belagträger (5, 23) und der Bremsbelag (6, 22) entsprechen dem Stand der Technik, wobei der Belagträger aufgrund der gleichmäßigeren Druckbelastung bei der erfindungsgemäßen Scheibenbremse eine geringere Dicke haben kann.
Für den Einsatz bei höheren Temperaturen werden temperaturbeständige Werkstoffe, vorzugsweise Fluor-Elastomere, wie z.B. Viton eingesetzt.
Erfindungsgemäß eignen sich konventionelle Hydraulik - Flüssigkeiten. Jedoch ist es aufgrund der reibungsfreien Bauweise auch möglich andere Fluide zu verwenden.

Die erfindungsgemäße elastomere Scheibenbremse weist folgende vorteilhafte Eigenschaften auf:
- Bei dem Einsatz von konventionellen Bremskolben erfahren diese beim Bremsen Querkräfte, die zum Verschleiß der Kolben und Dichtungen führen. Undichtigkeiten sind an dieser Stelle besonders ungünstig, da die Reibung der Bremsbeläge durch das Aufbringen von Hydraulikflüssigkeit beeinträchtigt und damit die Funktion der Bremse reduziert wird.
- Um die auf die Kolben wirkenden Querkräfte möglichst gering zu halten, müssen die Beläge bei der Kolbenbremse mit möglichst kleinem Spiel geführt werden. Dieses Spiel kann bei der Elastomerbremse ohne Einfluss auf die Funktion größer sein.
- Bei der konventionellen Bremse mit Kolben erfolgt der Druck auf die Kolbenfläche, so dass die Bremskraft dem Druck x Kolbenfläche beträgt. Bei der Elastomerbremse kann die Druckfläche (Fläche der Membran (2) und Elastomerschicht (3, 25)) an die Belagfläche, die erfindungsgemäß stets größer als die Fläche herkömmlicher Bremskolben ist, angepasst werden. Somit kann bei gleichem Hydraulikdruck die Bremskraft vergrößert werden, bzw. bei gleicher Bremskraft mit geringerem Hydraulikdruck gearbeitet werden. Dies ist insbesondere gegenüber der Verwendung von mehrerer Kolben bei konventionellen Scheibenbremsen ein Vorteil, da hier die Flächen zwischen den Kolben ungenutzt bleiben.
- Es sind insgesamt weniger Bauteile erforderlich. Bei den herkömmlichen Systemen müssen in der Regel mehr Bremskolben eingesetzt werden, um die gleiche Wirkung zu erzielen.
- Der Belag kann sich Schiefstellurigen gegenüber der Bremsscheibe (8) leicht anpassen.
- Aufgrund der für Kolben erforderlichen Bauhöhe kann die kolbenlose erfindungsgemäße Bremszange (1) flacher gebaut werden.
- Beim Einsatz von Kolben wird die Bremszange durch die für die Kolben erforderliche Bohrung geschwächt. Somit wird die erfindungsgemäße kolbenlose Bremszange stabiler, bzw. kann mit weniger Materialeinsatz leichter und kleiner gebaut werden.
- Derzeit werden die Bremsbeläge von einzelnen runden Kolben mit Kraft beaufschlagt. Um die Kraft trotzdem gleichmäßig über den Belag auf die Scheiben zu übertragen, müssen die Belagträger eine entsprechende Steifigkeit bzw. Dicke haben. Bei der Elastomerbremse gemäß der Erfindung wird der Belag gleichmäßig über die gesamte Fläche belastet. Das führt zu einer gleichmäßigen Druckbelastung der Beläge und erfordert weniger starke Belagträger.
- Bremsbeläge neigen zu Quietschgeräuschen. Durch die bei der Elastomerbremse vorhandenen Elastomere unter den Belägen können die für das Quietschen verantwortlichen Schwingungen positiv beeinflusst werden.
- Bei Feststellbremsen ist in manchen Bereichen die Schallübertragung über die geklemmte Bremse nicht erwünscht. Das ist insbesondere bei den Azimutbremsen von Windkraftanlagen der Fall, da der durch Generator, Getriebe und Lager erzeugte Körperschall nicht in den Turm eingeleitet werden darf, weil der Turm diesen Schall als Geräusch an die Umgebung weitergibt.
- Aufgrund der gegenüber Kolbenbremsen reibungsfreien Bauweise muss die zu verwendende Flüssigkeit keine Schmiereigenschaften haben; d.h. es können Medien eingesetzt werden, die beim Austreten und auch beim Entsorgen keine negativen Eigenschaften haben.
- Wie bereits erwähnt, sind Kraftelemente, welche direkt über Membranen betrieben werden, bekannt. Diese sind aber nicht für hohe Lasten geeignet, da die Membranen einen Bewegungsspalt zwischen bewegtem und unbewegtem Teil benötigen. Bei hohem Druck wird sich die Membrane durch diesen Spalt quetschen. Dagegen hat erfindungsgemäße elastomere Ausgleichsschicht (3, 25) den Vorteil, dass ein kleiner Spalt verwendet werden kann, der von dem Elastomer nicht durchdrungen wird. Dennoch verhält sich die ElastomerAusgleichsschicht (3, 25) wie eine Flüssigkeit.

## Patentansprüche

1. Scheibenbremse, umfassend (i) eine Bremszange (1), bestehend im wesentlichen aus zwei Bremsbacken (21), (ii) mindestens eine elastomere Schicht (25) anstelle von Bremskolben, welche mit einem Bremsbelag (22) in Verbindung steht, und (iii) mindestens eine hydraulische Vorrichtung (26, 27), wobei zwischen elastomerer Schicht und dem Bremsbelag eine Trägerplatte (23) für diesen angeordnet ist, und die elastomere Schicht bei Ausübung einer Bremskraft verformt werden kann, so dass der Bremsbelag einseitig oder beidseitig auf die Bremsscheibe (8) gepresst und **dadurch** die Bremswirkung entfaltet wird,
**dadurch gekennzeichnet, dass** zwischen elastomerer Schicht (25) und Bremsbelag (22) ein Elastomerring (24) so angeordnet ist, dass ein Eindringen von Elastomermaterial aus der Schicht (25) in den Raum zwischen Bremsbacken (21) und der Trägerplatte (23) verhindert wird.

2. Scheibenbremse nach Anspruch 1 **dadurch gekennzeichnet**, zwischen Elastomerschicht (25) und Trägerplatte (23) für den Bremsbelag eine Druckplatte (28) angeordnet ist.

3. Scheibenbremse nach Anspruch 1 oder 2, **dadurch gekennzeichnet, dass** der Elastomerring (24) eine größere Härte aufweist als die Elastomerschicht (25).

4. Scheibenbremse nach einem der Ansprüche 1-3, **dadurch gekennzeichnet, dass** der Elastomerring (24) in eine Aussparung in der Elastomerschicht (25) oder der Bremszange (1) eingelegt ist.

5. Scheibenbremse nach einem der Ansprüche 1 - 4, **dadurch gekennzeichnet, dass** die hydraulische Vorrichtung aus einer Zuführung (27) für die Bremsflüssigkeit (9), einer Druckmembran (2), die mit der Innenseite der Zange (1) fest verbunden ist, und einem Hohlraum (10) besteht, welcher sich im gebremsten Zustand zwischen Innenseite der Backe (21) der Bremszange (1) und der Membran (2) zu bilden vermag.

6. Scheibenbremse nach Anspruch 5, **dadurch gekennzeichnet, dass** die Druckmembran (2) ganz oder teilweise an der elastomeren Druckübertragungsschicht (25) unmittelbar anliegt oder mit ihr fest verbunden ist.

7. Scheibenbremse nach Anspruch 5 oder 6, **dadurch gekennzeichnet, dass** die Druckmembran (2) und die elastomere Schicht (25) unterschiedlich groß sind.

8. Scheibenbremse nach einem der Ansprüche 1 - 7, **dadurch gekennzeichnet, dass** die Bremsbacke (21) der Bremszange (1) mehrere Elastomerschichten (25) und / oder hydraulische Vorrichtungen (26, 27) aufweist, welche durch Rippen oder Zwischenstege (11) von einander getrennt sind und so ein Mehrkammersystem bilden.

9. Scheibenbremse nach Anspruch 8, **dadurch gekennzeichnet, dass** die Rippen oder Zwischenstege (11) nicht durchgängig zum Bremsbelag (22) oder den Platten (), () (28) ausgestaltet sind, so dass eine Elastomerschicht (25) durch zwei oder mehrere hydraulische Vorrichtungen (26, 27) betätigt werden.

10. Scheibenbremse nach einem der Ansprüche 1 - 9, **dadurch gekennzeichnet, dass** die Zuführung (27) der hydraulischen Flüssigkeit ganz oder teilweise durch die Backen (21) der Bremszange (1) geführt ist.

11. Verwendung der Scheibenbremse gemäß der Ansprüche 1 - 10 in Windkraftanlagen.

12. Verwendung nach Anspruch 11 zum Abbremsen der Azimutbewegung der Gondel der Windkraftanlage.

## Claims

1. Disc brake, comprising (i) a brake caliper (1), essentially consisting of two brake shoes (21), (ii) at least one elastomeric layer (25) instead of brake pistons, which is connected to a brake lining (22), and (iii) at least one hydraulic device (26, 27), where a support plate (23) for the elastomeric layer and the brake lining is arranged therebetween, and the elastomeric layer can be deformed on exertion of a braking force, so that the brake lining is pressed onto the brake, disc (8) on one or both sides and thus develops the braking action,
**characterized in that** an elastomer ring (24) is arranged between the elastomeric layer (25) and the brake lining (22) in such a way that ingress of elastomer material from the layer (25) into the space between the brake shoes (21) and the support plate (23) is prevented.

2. Disc brake according to Claim 1, **characterized in that** a pressure plate (28) for the brake lining is arranged between the elastomer layer (25) and the support plate (23).

3. Disc brake according to Claim 1 or 2, **characterized in that** the elastomer ring (24) has a greater hardness than the elastomer layer (25).

4. Disc brake according to one of Claims 1-3, **characterized in that** the elastomer ring (24) is laid into a recess in the elastomer layer (25) or the brake caliper (1).

5. Disc brake according to one of Claims 1 - 4, **characterized in that** the hydraulic device consists of a supply line (27) for the brake fluid (9), a pressure membrane (2), which is firmly connected to the inside of the caliper (1), and a cavity (10), which, in the braked state, is capable of forming between the inside of the shoe (21) of the brake caliper (1) and the membrane (2).

6. Disc brake according to Claim 5, **characterized in that** the pressure membrane (2) is fully or partly in direct contact with the elastomeric pressure-transfer layer (25) or is firmly connected thereto.

7. Disc brake according to Claim 5 or 6, **characterized in that** the pressure membrane (2) and the elastomeric layer (25) are of different sizes.

8. Disc brake according to one of Claims 1 - 7, **characterized in that** the brake shoe (21) of the brake caliper (1) has a plurality of elastomer layers (25) and/or hydraulic devices (26, 27), which are separated from one another by ribs or ridges (11) and thus form a multichamber system.

9. Disc brake according to Claim 8, **characterized in that** the ribs or ridges (11) do not have a continuous design with respect to the brake lining (22) or the plates (28), so that an elastomer layer (25) is actuated by two or more hydraulic devices (26, 27).

10. Disc brake according to one of Claims 1 - 9, **characterized in that** the supply line (27) for the hydraulic fluid is run fully or partly through the shoes (21) of the brake caliper (1).

11. Use of the disc brake according to Claims 1 - 10 in wind turbines.

12. Use according to Claim 11 for braking the azimuthal movement of the gondola of the wind turbine.

## Revendications

1. Frein à disque, comprenant (i) un étrier de frein (1), essentiellement constitué de deux mâchoires de frein (21), (ii) au moins une couche élastomérique (25) à la place des pistons de frein, qui est connectée à une garniture de frein (22), et (iii) au moins un dispositif hydraulique (26, 27), dans lequel une plaque de support (23) pour la couche élastomérique et la garniture de frein est agencée entre, et la couche élastomérique peut être déformée lors de l'application de la force de freinage, de telle sorte que la garniture de frein soit pressée sur le disque de frein (8) sur un côté ou les deux côtés en développant ainsi l'action de freinage,
**caractérisé en ce que** une bague élastomérique (24) est agencée entre la couche élastomérique (25) et la garniture de frein (22) de telle sorte qu'une introduction de matériau élastomérique depuis la couche (25) dans l'espace entre les mâchoires de frein (21) et la plaque de support (23) soit empêchée.

2. Frein à disque selon la revendication 1, **caractérisé en ce qu'**une plaque de pression (28) pour la garniture de frein est agencée entre la couche élastomérique (25) et la plaque de support (23).

3. Frein à disque selon la revendication 1 ou 2, **caractérisé en ce que** la bague élastomérique (24) présente une dureté supérieure à celle de la couche élastomérique (25).

4. Frein à disque selon l'une des revendications 1 - 3, **caractérisé en ce que** la bague élastomérique (24) vient s'appliquer dans un évidement ménagé dans la couche élastomérique (25) ou l'étrier de frein (1).

5. Frein à disque selon l'une des revendications 1 - 4, **caractérisé en ce que** le dispositif hydraulique est constitué d'une ligne d'alimentation (27) pour le fluide de frein (9), d'une membrane de pression (2), laquelle est fermement connectée à l'intérieur de l'étrier (1), et d'une cavité (10), laquelle, dans l'état de freinage, est capable de se former entre l'intérieur de la mâchoire (21) de l'étrier de frein (1) et la membrane (2).

6. Frein à disque selon la revendication 5, **caractérisé en ce que** la membrane de pression (2) est complètement ou partiellement en contact direct avec la couche de transfert de pression élastomérique (25) ou est fermement connectée à celle-ci.

7. Frein à disque selon l'une des revendications 5 ou 6, **caractérisé en ce que** la membrane de pression (2) et la couche élastomérique (25) sont de dimensions différentes.

8. Frein à disque selon l'une des revendications 1 - 7, **caractérisé en ce que** la mâchoire de frein (21) de l'étrier de frein (1) comprend une pluralité de couches élastomériques (25) et/ou de dispositifs hydrauliques (26, 27), qui sont séparé(e)s les un(e)s des autres par des nervures ou rebords (11) et qui forment ainsi un système multicouche.

9. Frein à disque selon la revendication 8, **caractérisé en ce que** les nervures ou rebords (11) ne présentent pas de forme continue par rapport à la garniture de frein (22) ou les plaques (28), de telle sorte qu'une couche élastomérique (25) soit actionnée par deux ou plus de deux dispositifs hydrauliques (26, 27).

10. Frein à disque selon l'une des revendications 1 - 9, **caractérisé en ce que** la ligne d'alimentation (27) pour le fluide hydraulique est acheminée pleinement ou partiellement au travers des mâchoires (21) de l'étrier de frein (1).

11. Utilisation du frein à disque selon les revendications 1-10 dans des éoliennes.

12. Utilisation selon la revendication 11 pour freiner le mouvement azimutal de la nacelle de l'éolienne.
